# EUROPÄISCHE PATENTSCHRIFT

(11) **EP 3 643 416 B1**
(45) Veröffentlichungstag und Bekanntmachung des Hinweises auf die Patenterteilung: **15.11.2023**
(21) Anmeldenummer: 18201676.6
(22) Anmeldetag: 22.10.2018
(51) Int. Cl.: B09C 1/00, C02F 3/02, E21B 43/32

(54) **GASINJEKTIONSLANZE ZUR INJEKTION VON GAS IN EINE PORÖSE FESTSTOFFMATRIX**
LANCE FOR INJECTING GAS INTO A POROUS SOLID MATRIX
LANCE D'INJECTION DE GAZ DANS UNE MATRICE SOLIDE POREUSE

(43) Veröffentlichungstag der Anmeldung: 29.04.2020
(73) Patentinhaber: Technische Universität Dresden, 01067 Dresden (DE); Sensatec GmbH, 24159 Kiel (DE); Beermann Bohrtechnik GmbH, 48477 Hörstel-Riesenbeck (DE)
(72) Erfinder: Krause, Thomas, 01159 Dresden (DE); Kalwa, Fritz, 01097 Dresden (DE); Engelmann, Frank Ingolf, 16833 Fehrbellin (DE); Mücke, Timo, 48477 Hörstel (DE)
(74) Vertreter: Gottfried, Hans-Peter

(56) Entgegenhaltungen:
- EP-A1- 1 550 519
- WO-A1-94/05604
- US-A1- 2010 186 952

## Beschreibung

Die Erfindung betrifft eine Gasinjektionslanze, geeignet zur Verwendung in der Injektionsvorrichtung, einer Vorrichtung zur Injektion von Gas in eine poröse Feststoffmatrix. Als poröse Feststoffmatrix kommen sowohl Gebirge aus Sanden und Kiesen als auch Schüttungen wie Halden, Mieten oder verfüllte Gräben bzw. vertikale Erdaufschlüsse in Betracht.

Die Injektionsvorrichtung ist beispielsweise geeignet zur Durchführung eines Verfahrens zur Reduzierung einer hydraulisch wirksamen Porosität einer porösen Feststoffmatrix durch Injektion wenigstens eines Gases in die poröse Feststoffmatrix, wobei das Gas einen Gasspeicher in der Feststoffmatrix ausbildet. Der Gasspeicher bildet dabei zumindest einen Schleier aus, der als Barriere in horizontaler Richtung, insbesondere in einer Grundwasserfließrichtung, wirksam ist und dessen Höhe bis zum Grundwasserspiegel reicht. Der Gasspeicher kann auch als insitu Reaktor mit den drei Dimensionen Länge, Höhe und Dicke ausgebildet sein, wobei in diesem Fall die eingespeicherte Gasmenge abhängig ist vom Bedarf, der Löslichkeit und dem Stoffumsatz. Die eingespeicherte Gasmenge erfordert eine gezielte Bewirtschaftung bei der Nutzung des Gasspeichers als insitu Reaktor, insbesondere die Speicherentladung und die Speicherbeladung betreffend.

Die Reduzierung der hydraulisch wirksamen Porosität einer porösen Feststoffmatrix bewirkt beispielsweise eine Verminderung des Durchflusses eines in der porösen Feststoffmatrix vorliegenden Fluids, beispielsweise Grundwasser im Sedimentgefüge des Untergrunds. Darüber hinaus kann der Gasspeicher in Abhängigkeit von dem eingebrachten Gas oder Gasgemisch weitere Effekte hervorrufen, insbesondere durch eine chemische Reaktion mit dem Fluid, beispielsweise kontaminiertem Grundwasser, oder der porösen Feststoffmatrix, beispielsweise dem Sedimentgefüge oder der Schüttung. Verschiedene Verfahren, die derartige Ziele verfolgen, sind aus dem Stand der Technik bekannt.

Aus den Druckschriften EP 0 780 166 A1, WO 00/63127 A1, WO 00/45970 A1, US 6,210,073 B1, US 5,133,625 A, US 4,442,895 A und US 5,032,042 A sind Verfahren und Vorrichtungen zur Stimulation des Abbaus grundwasserfremder Stoffe in Lockergesteinsgrundwasserleitern durch Direktgasinjektionen ins Grundwasser bekannt. Durch Gaseintrag über vertikale Gaslanzen werden im Untergrund Gaswände geschaffen und somit möglichst gut durchströmbare in-situ Festbettdurchflussreaktoren formiert.

Alle vorgenannten Verfahren sind dadurch gekennzeichnet, dass sie auf vertikalen Injektionslanzen mit einem erheblichen konstruktiven und überwachungstechnischen Aufwand basieren. Zudem werden durch die annähernd paraboloidförmige Ausbreitung der Gase ausgehend vom Injektionspunkt in den Grundwassersystemen kegelförmige Bereiche in den Gaswänden nicht gleichmäßig und ausreichend mit Gas versorgt.

Die Druckschriften EP 0 625 126 B1 und US 4,832,122 A beschreiben Verfahren und Vorrichtungen, bei denen ein Gaseintrag in ein Sedimentgefüge mit Hilfe horizontaler Gaslanzen erfolgt. Dieses System weist zwei Arten bzw. Sätze von Brunnen auf, einen Eingabe- bzw. Injektionsbrunnen zum Eingeben bzw. Injizieren eines Fluids in eine gesättigte Zone auf einer Seite der Schadstoffe oder in den Schadstoffbereich hinein und einen Abzugs- bzw. Extraktionsbrunnen zum Sammeln des Fluids zusammen mit den gelösten bzw. flüchtig gemachten Schadstoffen aus dem Bereich, und zwar entweder auf der anderen Seite des Bereichs oder oberhalb davon oder innerhalb dieses Bereichs. Ein erhöhter installationstechnischer Aufwand ist somit durch den Bedarf der voneinander getrennten Applikations- und Extraktionssysteme gegeben. Vor allem aber ist eine Reduzierung der hydraulisch wirksamen Porosität der porösen Feststoffmatrix, in die das System eingebaut ist, durch die Injektion von Gas nicht vorgesehen. Im Gegenteil, zum Sammeln des Fluids zusammen mit den gelösten bzw. flüchtig gemachten Schadstoffen ist eine ausreichende Durchströmung zwingend erforderlich sowie ein hoher Energie- und Materialaufwand zu leisten, um den angestrebten Effekt zu erzielen.

Nach der Druckschrift DE 101 53 061 A1 sind ein Verfahren und eine Vorrichtung für die Erstellung eines Horizontalfilterbrunnens zur Entnahme von Flüssigkeiten bekannt. Die Vorrichtung wird durch einen Filterstrang für unterirdische Sammelleitungen für Flüssigkeiten gebildet, insbesondere für Horizontalfilterbrunnen und Drainageleitungen aus einem standfesten, zum Einziehen in eine Bohrung im Untergrund ausreichende mechanische Festigkeit aufweisenden, groblöchrigen Loch- oder Gitterrohr und darin angeordnetem Filtermaterial. Die Verfahren zum Einbringen des Filterstrangs in vorbestimmte Schichten sind dadurch gekennzeichnet, dass zunächst ein stabiles und standfestes Bohrloch erzeugt wird, welches einen auf den Filterstrang abgestimmten Durchmesser aufweist. Das Bohrloch bzw. die Bohrlochwand wird beim bzw. nach dem Einbau des Filterstranges mechanisch nicht weiter bearbeitet. Eine gezielte Bohrkanalformierung ist nur indirekt über das bereits eingezogene Filterrohr vorgesehen. Damit sind die Eigenschaften hinsichtlich der hydraulischen Leitfähigkeit der Bohrlochwand nicht gezielt beeinflussbar.

Aus der Druckschrift DE 10 2004 020 888 A1 ist ein Verfahren bekannt, bei dem mittels grabenloser Technik ein permeables Rohrsystem verlegt wird. Die Erfindung wird insbesondere für Entwässerungs- oder Drainagezwecke im Erdreich genutzt. Hierzu wird zunächst ein Stützrohr des mindestens zweiteiligen Rohrsystems mittels grabenloser Verlegetechnik in das Erdreich eingebracht und anschließend mindestens ein Filterkörper in das Stützrohr eingezogen.

Durch den Einbau vertikaler Gaslanzen entsteht ein erheblicher Aufwand, da diese relativ dicht nebeneinander eingebracht werden müssen, um einen geschlossenen Bereich mit herabgesetzter hydraulisch wirksamer Porosität zu erreichen - ohne dass jedoch eine lückenlose Gasverteilung erreicht werden kann.

Bei der Lösung, die aus der Druckschrift DD 203 349 A1 bekannt ist, ist eine Injektion von Gas in ein Sedimentgefüge vorgesehen. Hierzu werden vertikale Brunnen in den Untergrund eingebracht. Für den Eintrag reaktiver Gase ist das Verfahren ungeeignet, da zwischen den vertikalen Brunnen stets Bereiche entstehen werden, die nicht vom reaktiven Gas erreicht werden und somit auch keine Abbauprozesse über das gesamte zu behandelnde Volumen initiiert und/oder stimuliert werden können.

Die Druckschrift US 2010/186952 A1 beschreibt eine Vorrichtung zur Injektion von Gas (Absatz [0031]) mit einem Stützrohr (Absatz [0038]), wobei das Stützrohr Gasdurchlässe (Absatz [0038]) aufweist. Weiterhin wird eine Gasinjektionslanze gezeigt, die in ein Stützrohr einführbar ist (Absatz [0047]), mit wenigstens einer Injektionsdüse, ausgeführt als eine Perforation in einer Wand der Lanze. Eine gezielte Steuerung des Gaseintrags in bestimmten Bereichen des Stützrohrs ist jedoch nur möglich, indem Packer zwischen der Bohrlochwand und dem Stützrohr eingebracht und expandiert werden. Dies erfordert eine entsprechende Stabilität der Bohrlochwand, wodurch die Einsatzmöglichkeiten erheblich einschränkt werden.

Aus der Druckschrift WO 94/05604 A1 ist eine Vorrichtung zur Injektion und Entnahme von Luft durch jeweils horizontal in den Untergrund eingebrachte Brunnen, einen Injektionsbrunnen und einen Entnahmebrunnen, bekannt. Die Brunnen sind als Rohre mit Öffnungen, insbesondere Schlitze, durch die die Luft aus- bzw. eintreten kann, ausgebildet. Dabei werden die Rohre zentral be- bzw. entlüftet. Eine gezielte Steuerung des Gaseintrags in bestimmten Bereichen ist jedoch nicht möglich.

Die Druckschrift EP 1 550 519 A1 beschreibt eine flexible Injektionslanze, die vertikal in eine poröse Feststoffmatrix eingebracht ist und aus einem kleinkalibrigen, druckfesten Schlauch besteht. Dessen unteres Ende weist einen Gasaustrittsfilter auf, durch den Gas abgegeben wird, das zuvor am oberen Ende eingespeist wurde. Durch die punktuelle vertikale Einbringung ist ein großräumiger Gaseintrag nur begrenzt und in Abhängigkeit von der vorliegenden porösen Feststoffmatrix möglich. Zudem ist keine gezielte Steuerung des Gaseintrags in bestimmten Bereichen möglich.

Aufgabe der Erfindung ist es, eine einfache, materialsparende und damit kostengünstige Vorrichtung anzubieten, mit der Gas in eine poröse Feststoffmatrix injiziert werden kann.

Die Aufgabe wird gelöst durch eine Gasinjektionslanze, umfassend einen langgestreckten, zumindest unter Druck hohlzylindrischen, flexiblen Grundkörper, der zumindest an einem ersten Ende mit einer ersten Gasleitung für ein Gas verbindbar und in ein Stützrohr eingeführt ist und wenigstens eine Injektionsdüse umfasst. Die wenigstens eine Injektionsdüse ist ausgeführt als eine Perforation in einer Wand der Gasinjektionslanze und geeignet zu einem kontrollieren Durchgang des Gases. Eine Injektion erfolgt durch Übertritt des Gases in eine poröse Feststoffmatrix. Nach der Erfindung umfasst die Gasinjektionslanze ein oder mehrere in einem Ringspalt zwischen Gasinjektionslanze und Stützrohr abdichtend wirkende Paare von Packerelementen, die eine Zuführeinrichtung eines Fluids zu den Packerelementen umfassen und die durch das unter Druck dem Inneren der Packerelemente zugeführte Fluid expandieren. Zwischen jeweils einem Paar Packerelementen ist wenigstens eine der Injektionsdüsen angeordnet.

Die Gasinjektionslanze kann in einer Injektionsvorrichtung zur insbesondere horizontalen, schrägen oder vertikalen Injektion von Gas eingesetzt werden, wobei auch Gasgemische, Aerosole oder Fluide anderer Art umfasst sind, in eine poröse Feststoffmatrix, wobei das Gas über eine Gasleitung der Injektionsvorrichtung zugeführt wird. Beispielsweise wird die Injektion über ein Stützrohr, das in einem Bohrkanal verlegt ist, realisiert. Das Stützrohr ist in dem Fall unmittelbar mit der Gasleitung verbunden, wenn direkt und allein über das Stützrohr injiziert wird.

Es ist somit vorgesehen, dass die Injektion über ein zumindest auf einem Teil des durch eine Injektionszone führenden Abschnitts des Stützrohrs Gasdurchlässe aufweisendes Stützrohr erfolgt. Die Injektionszone ist der Bereich, in den Gas eingetragen werden soll. Sie erstreckt sich vom Stützrohr an seitlich, bevorzugt jedoch aufwärts.

Das Stützrohr ist bevorzugt zentrisch in den Bohrkanal oder auf andere Weise in die poröse Feststoffmatrix eingebracht. Hierzu ist ein gasdurchlässiges Stützrohr mit kleinem Durchmesser zwischen 15 und 150 mm zur Gasinjektion an ein Gasversorgungs- und Steuerungssystem angeschlossen. Dieses wird bevorzugt in einem speziell gestalteten Bohrkanal installiert und in der Nähe jener Bereiche, in denen die Geländeoberkante durchstoßen wird, im Untergrund gegenüber der umgebenden Atmosphäre im Grundwasserbereich verankert und gegen unerwünschte Gasdrift abgedichtet. Gegen derartige Gasaustritte in die Bodenluft und die Umgebung wird dieser Bohrkanal durch geeignete Maßnahmen, wie z. B. eine Abdichtung durch ein plastisch formbares Dichtmaterial oder andere aus dem Stand der Technik bekannte Maßnahmen, abgedichtet.

Alternativ zu dem Bohrkanal kann das Stützrohr lageunabhängig unter einem Haufwerk, z. B. einer Schüttung, einer Halde, einer Deponie oder einer Miete angeordnet sein. Gleiches gilt für einen Graben oder einen vertikalen Erdaufschluss. Die poröse Feststoffmatrix ist in diesem Fall das das Stützrohr umgebende Material.

Die Gasdurchlässe im Stützrohr sind bevorzugt geschlitzt ausgeführt, wobei die Schlitzweite bevorzugt im Bereich von 0,1 - 2 mm liegt und in Abhängigkeit von der porösen Feststoffmatrix, vor allem der vorliegenden Korngrößen, festgelegt ist. Bevorzugte Gaseintragsraten liegen bei 0,1 bis 15 m³ pro Stunde und Meter Bohrkanallänge, besonders bevorzugt bei 0,5 bis 4 m³.

Der Bohrkanal ist durch seine Form gekennzeichnet, muss jedoch nicht zwangsläufig durch ein Bohrverfahren hergestellt und in der Weise in die poröse Feststoffmatrix eingebracht worden sein. Exemplarisch ist dies ist zwar Gegenstand der bevorzugten Verwendung der Injektionsvorrichtung. Nach einer alternativen Ausgestaltung Injektionsvorrichtung ist es jedoch beispielsweise vorgesehen, die poröse Feststoffmatrix um ein stützendes Hilfselement herum, insbesondere dem Stützrohr, beispielsweise durch Einspülung von Material oder Erstellung von einem Haufwerk, zu entwickeln und damit eine Filterzone mit ihren im Ausführungsbeispiel beschriebenen Funktionen und Effekten herzustellen.

Die Injektionsvorrichtung ist beispielsweise geeignet zur Ausbildung eines Gasspeichers innerhalb der porösen Feststoffmatrix im Untergrund. Insbesondere kann ein Verfahren zur Reduzierung einer hydraulisch wirksamen Porosität einer porösen Feststoffmatrix durch Injektion wenigstens eines Gases in die poröse Feststoffmatrix durchgeführt werden, wobei das Gas einen Gasspeicher, in anderen Anwendungsfeldern auch als Gasschleier bezeichnet, in der porösen Feststoffmatrix ausbildet. Bei dieser beispielshaften Nutzung erfolgt die Injektion über das horizontal und/oder geneigt verlaufende Stützrohr, wobei die Neigung des Stützrohrs gegenüber der Horizontalen zwischen > 0 und < 60° beträgt, bevorzugt jedoch bis höchstens 30°. Es ist aber auch möglich, das Stützrohr grabenlos bei 0° Neigung oder vertikal einzubringen.

Wird der Bohrkanal mittels eines bekannten Horizontalbohrverfahrens eingebracht, schließt sich an einen geneigten Abschnitt ein horizontaler Abschnitt an. Die Bohrung wird am Ende über einen geneigten Abschnitt wieder aus dem Untergrund heraus an die Oberfläche geführt. Daraus ergibt sich, dass der Bohrkanal horizontal verläuft oder die Neigung des Bohrkanals gegenüber der Horizontalen zwischen > 0 und < 60° beträgt.

Vorteilhafterweise ist das Stützrohr so ausgeführt, dass ein Gasdruck, bevorzugt zwischen 0,5 und 16 bar, besonders bevorzugt 5 bis 10 bar, angelegt werden kann, der zugleich an der Wandung der Poren aufweisenden Feststoffmatrix, deren Gaswegsamkeit bevorzugt gezielt beeinflusst und eingestellt werden soll, anliegt. Dadurch kann sich von dem Stützrohr aus eine Vielzahl kohärenter und inkohärenter, vertikaler Gasaufstiegsbahnen in die poröse Feststoffmatrix ausbilden. In der Folge formiert sich der Gasspeicher in der porösen Feststoffmatrix, beispielsweise im Gebirge, einem Graben oder einem vertikalen Erdaufschluss, in einer Halde oder einer Miete, die bevorzugte oder beispielhafte Anwendungen bzw. Ausgestaltungen der porösen Feststoffmatrix darstellen.

Nach der primären, horizontalen Gasverteilung im Bohrkanal erfolgt bei der hier dargestellten beispielhaften Anwendung der Injektionsvorrichtung somit über seine gesamte Länge ein kohärenter und inkohärenter, vertikaler Gasaufstieg und die Formierung eines weitgehend homogenen Gasspeichers mit einer kontinuierlichen Versorgung mit zugeführtem Gas, in der Folge beispielsweise eine verringerte hydraulisch wirksame Porosität und daraus resultierend hydraulische Leitfähigkeit.

Als vorteilhaft hat sich beim Einsatz der Injektionsvorrichtung in horizontaler Einbaulage erwiesen, wenn die unmittelbare Umgebung des Stützrohrs, im Gegensatz zur weiter ab umliegenden Feststoffmatrix, eine geringere Lagerungsdichte mit einem erhöhten Anteil feinerer Kornfraktionen und größerer Ungleichförmigkeit enthält. Hierdurch wird die zunächst angestrebte bevorzugte laterale Gasverteilung im Bohrkanal und der sich dann anschließende kohärente und inkohärente vertikale Gasaufstieg ins darüber liegende Gebirge zur Formierung des Gasspeichers ermöglicht.

Ein bedeutender Vorteil der Injektionsvorrichtung kommt zum Tragen, wenn zumindest temporär die Injektion wenigstens eines reaktiven Gases, wie z. B. O₂, CH₄, H₂, CO₂, Ethen oder Ethan, zumindest anteilig zum Trägergas vorgesehen ist, sodass sowohl mikrobielle als auch chemische Prozesse, bevorzugt zum Schadstoffabbau im Gasspeicher zur Frachtreduzierung in der porösen Feststoffmatrix initiiert und/oder stimuliert werden. Es hat sich überraschend gezeigt, dass die Reduzierung der hydraulisch wirksamen Porosität der porösen Feststoffmatrix dazu führt, dass chemische oder biochemische Reaktionen in der porösen Feststoffmatrix bzw. dem eingelagerten oder durchströmenden Fluid, vor allem durch Abbauprozesse, die Reduzierung von Frachten begünstigt. Die Reduzierung des Gefährdungspotenzials einer Kontamination wird jedoch nicht nur durch eine Verringerung der Schadstoffkonzentration auf Grund von Abbau erreicht, sondern auch durch eine Reduzierung der Grundwasserströmung. Dies stellt damit ein zusätzliches Element für eine Gefahrenabwehr dar.

Besondere Vorteile verspricht der Einsatz der Injektionsvorrichtung, wenn der Gasspeicher in einem Grundwasserleiter unter Beachtung der vom Gas beeinflussten hydrogeologischen Verhältnisse ausgebildet wird. Die Injektionsvorrichtung bietet, insbesondere in der Ausführungsform einer Kombination von Stützrohr und Gasinjektionslanze, weitreichende Vorteile.

Weiterhin ist es möglich, das Stützrohr nach demontierter Gasinjektionslanze zu regenerieren, beispielsweise im Falle einer Verockerung, um danach die Gasinjektionslanze erneut zu installieren. Vorteilhaft ist es dazu, wenn das Stützrohr an wenigstens einem Ende eine Öffnung aufweist, durch die Werkzeuge zur Regenerierung mit mechanischen, pneumatischen, hydraulischen oder chemischen Maßnahmen in das Stützrohr eingeführt werden können.

Weitere Anwendungen der Injektionsvorrichtung betreffen beispielsweise die gezielte Beeinflussung und Behandlung von Schüttungen wie Halden oder Mieten, aber auch Gräben oder vertikale Erdaufschlüsse.

Bei einer alternativen Ausführungsform ist das Stützrohr in seinem Verlauf mit einem oder mehreren Abschnitten ohne Perforation bzw. Gasdurchlässe ausgeführt, so dass diese Abschnitte zur pneumatischen oder hydraulischen Nutzung unabhängig von der planmäßigen Begasung bzw. Injektion von Gas verwendet werden können. Das Stützrohr weist besonders bevorzugt einen Durchmesser zwischen 25 und 65 mm auf. Dadurch kann auch ein 2-Zoll-Rohr mittels des Direct-Push-Verfahrens eingebaut werden.

Das Stützrohr ist zur Aufnahme der Gasinjektionslanze in seinem Inneren geeignet, wobei an die Gasinjektionslanze ein Gasdruck angelegt wird und das Gas in das Stützrohr einströmt. Diese wird durch ein langestrecktes Bauteil als Grundkörper gebildet, das zumindest unter Druck hohlzylindrisch ausgebildet ist. Als hohlzylindrisch werden im Sinne der Erfindung auch Querschnitte betrachtet, die mehr oder minder stark von der Kreisform abweichen, beispielsweise ovale oder flache Querschnitte. Der Grundkörper kann z. B. ein Rohr oder ein Schlauch, der auch flexibel ausgeführt ist und ohne Innendruck flachliegt, sein. Die Gasinjektionslanze ist ausgeführt als eine in ein Stützrohr einführbare, flexible, rohrförmige oder zu einem rohrförmigen Querschnitt formbare Vorrichtung zur Abgabe von Gas in das Stützrohr. Die Abgabe von Gas erfolgt über wenigstens eine Perforation in der Wand, die zum kontrollierten Gasdurchgang durch die Wand der rohrförmigen bzw. so solcher formbaren Vorrichtung ausgeführt ist. Diese Perforation wird nachfolgend als Injektionsdüse bezeichnet. In dem langestreckten, hohlzylindrischen Bauteil ist zumindest eine Düse für den Austritt von Gas vorgesehen. Das Gas strömt daher über wenigstens eine Injektionsdüse.

Die Gasinjektionslanze wird zumindest im Betrieb mit wenigstens einer Gasleitung zur Zuführung von Gas an wenigstens einem ersten Ende verbunden. Das entsprechend gewählte Verhältnis von Gasinjektionsdruck zur Ausführung der Injektionsdüsen, insbesondere Querschnitt, aber auch die Beachtung der Oberflächenbeschaffenheit und anderer Einflussfaktoren, ermöglicht eine superkritische Gasströmung in den Düsen.

Die Packerelemente, jeweils beidseits wenigstens einer Injektionsdüse angeordnet, werden durch den Gasdruck expandiert und legen sich abdichtend an der Innenwand des Stützrohrs an. Dadurch wird es möglich, ein Abdriften des Gases entlang der Achse des Stützrohrs zu verhindern und den Bereich des Gasaustritts aus dem Stützrohr in den Bohrkanal bzw. in die poröse Feststoffmatrix lokal zu begrenzen. Dadurch wird eine den Vorgaben entsprechende Gasabgabe entlang der erfindungsgemäßen Gasinjektionslanze ermöglicht. Die die Gasinjektionslanze abdichtend wirkenden, expandierbaren Paare von Packerelementen umfassen eine Zuführung eines Fluids zu den Packerelementen, bevorzugt ein Gas. Bei der Expansion durch den im Inneren anliegenden Druck des Fluids, insbesondere den Gasdruck, legen sich die Packerelemente, die bevorzugt als eine flexible Membran ausgeführt sind, an der Innenwand des Stützrohrs an. Dadurch wird es möglich, ein Abdriften des Gases entlang der Achse des Stützrohrs zu verhindern und den Bereich des Gasaustritts aus dem Stützrohr in den Bohrkanal bzw. in die poröse Feststoffmatrix lokal zu begrenzen. Zwischen Gasinjektionslanze und Stützrohr sind ein oder mehrere Packerelemente nach der zuvor beschriebenen Ausführungsform vorgesehen. Nach einer vorteilhaften Ausführungsform beträgt der Abstand der Packerelemente, die jeweils eine Injektionsdüse oder eine Gruppe von Injektionsdüsen beidseits abdichtet, maximal 5 m.

Ergänzend hat es sich als vorteilhaft erwiesen, wenn die beiden schräg aufsteigenden Teile des Stützrohrs, die bei einer im Wesentlichen horizontalen oder geneigten Verlegung an den horizontalen oder geneigten Bereich angrenzen, mithilfe einer Verfestigung der Bohrlochwand oder durch eine andere Art der Abdichtung gegen unerwünschte Gaswegsamkeiten, also ein Abströmen des Gases auf anderen Wegen als den vorgesehenen, in diesem Bereich abgedichtet werden.

Die bevorzugte Ausführungsform sieht für die Versorgung mit Gas eine gemeinsame Gasleitung in Form eines Gasrohrs oder Gasschlauchs vor, ausgeführt zur gleichzeitigen Versorgung von Injektionsdüsen und Packerelementen, die bevorzugt als pneumatischer Packer ausgeführt sind und daher mit demselben Gas betrieben werden können, das auch zur Injektion vorgesehen ist.

Eine besonders vorteilhafte Ausgestaltung der Erfindung sieht vor, dass jeweils mehr als eine, bevorzugt vier Injektionsdüsen als eine Gruppe mit jeweils zwei beidseits jeder Gruppe von Injektionsdüsen und somit paarweise angeordneten, bevorzugt pneumatisch betriebenen Packerelementen ausgeführt sind. Die beidseitige Anordnung ist, betrachtet in Längsausdehnung der Gasinjektionslanze, hintereinander, vor und nach der Gruppe von Injektionsdüsen. Diese können dieselbe Gasleitung nutzen. Mehrere Injektionsdüsen haben den Vorteil, dass die superkritische Strömung in jeder einzelnen Düse leichter erreicht wird und zudem die zugleich vorhandene Redundanz zu einer höheren Betriebssicherheit führt. Die Injektionsdüsen können einen kleineren Durchmesser aufweisen und dennoch in Summe denselben Querschnitt für den Gasaustritt aufweisen.

Es ist ebenfalls möglich, eine Gasaustragsmenge an der Injektionsdüse oder den Injektionsdüsen zwischen einem Paar Packerelementen nach Bedarf unterschiedlich einzustellen, beispielsweise in dem diese unterschiedliche Öffnungsquerschnitte aufweisen oder eine unterschiedliche Anzahl von Injektionsdüsen vorgesehen ist. Der Bedarf richtet sich dabei beispielsweise nach den geplanten Gassättigungen.

Die Packerelemente sind nach der bevorzugten Ausgestaltung entweder schraubbar mit der Gasleitung verbunden oder auf die Gasleitung aufgesetzt. Um Bereiche entlang der Gasinjektionslanze zusammenzuschalten und damit größere zusammenhängende Bereiche zu schaffen, die unter einheitlichen Bedingungen begast werden können, kann es darüber hinaus vorteilhaft sein, einzelne Packerelemente separat anzusteuern.

Alternativ dazu ist wenigstens ein Paar Packerelemente bzw. wenigstens ein Packerelement mit einer gesonderten Gasleitung verbunden. Jedes mit einer gesonderten Gasleitung verbundene Paar Packerelemente bzw. jedes Packerelement kann dann gesondert angesteuert werden. Dies ist beispielsweise unerlässlich zur Abdichtung in einem Bereich des Stützrohrs, der keine Perforation aufweist. Hierdurch können verbesserte Steuerungsmöglichkeiten erzielt werden.

Es hat sich weiterhin als günstig erwiesen, wenn das Verhältnis von Gasinjektionsdruck zu Öffnungsquerschnitt der Injektionsdüse eine superkritische Gasströmung in der Injektionsdüse ermöglicht. Sobald das Kriterium der superkritischen Strömung, bei der das Fluid mindestens mit Schallgeschwindigkeit aus der Düse ausströmt, erreicht ist, nimmt der Massestrom durch die Injektionsdüse selbst bei Änderung des Gegendrucks einen nahezu konstanten Wert an. Eine massenkonstante Versorgung mit Gas, das im superkritischen Strömungszustand durch die Injektionsdüsen austritt, ist somit auch unter wechselnden Umgebungsbedingungen möglich. Hierzu gehören beispielsweise hydrostatischer Gegendruck oder atmosphärischer Druck. Ein sich über die Länge erheblich ändernder hydrostatischer Gegendruck tritt beispielsweise beim geneigten Einbau des Stützrohrs mit Gasinjektionslanze in einem Grundwasserleiter auf.

Ein hoher Druck in der Gasinjektionslanze führt zudem dazu, dass der Druckabfall über alle Düsen nicht größer als der für die an jeder Injektionsdüse vorgesehene Gasinjektionsrate erforderliche Mindestdruck ist. Das bedeutet, dass auch für die in Strömungsrichtung in der Gasinjektionslanze letzte Injektionsdüse die vorgesehene Gasinjektionsrate gewährleistet wird.

Weiterhin ist es vorteilhaft, wenn die Injektionsdüsen bzw. die gesamte Gasinjektionslanze zur lokalen Anpassung oder Variation der Gasinjektionsrate verschoben und gewechselt werden können. Die Injektion kann sowohl über die erste Gasleitung zum ersten Packerelement, über die zweite Gasleitung vom letzten Packerelement als auch von beiden Punkten aus gleichzeitig betrieben werden.

Eine optimale Überwachung der sicheren Funktion bieten Sensoren zur Aufzeichnung von Druck und Gasdurchfluss an einem ersten und einem zweiten Ende der Gasinjektionslanze sowie im Ringraum zwischen Gasinjektionslanze und dem in diesem Bereich nicht geschlitzten Stützrohr. Damit wird es möglich, die Funktion der Gasinjektionslanze zu kontrollieren.

Eine vorteilhafte Möglichkeit für die Injektion des Gases erfolgt über eine verschiebbare Gasinjektionslanze, umfassend wenigstens eine Injektionsdüse zum Austritt des Gases, wobei die Gasinjektionslanze in das Stützrohr eingebracht wird. Die Gasinjektionslanze ist nicht nur in ihrer Lage gegenüber dem Stützrohr veränderbar und verschiebbar, sondern auch komplett auswechselbar, beispielsweise bei Defekt oder bei geänderten Anforderungen, wie Gestaltung, Art und Anzahl von Injektionsdüsen.

Ergänzend hat es sich als vorteilhaft erwiesen, wenn die beiden schräg aufsteigenden Teile des Stützrohrs mithilfe einer Verfestigung z. B. der Bohrlochwand oder durch eine andere dort eingebrachte Dichtung gegen unerwünschte Gaswegsamkeiten in diesem Bereich abgedichtet werden.

Anhand der Beschreibung von Ausführungsbeispielen und ihrer Darstellung in den zugehörigen Zeichnungen wird die Erfindung nachfolgend näher erläutert. Es zeigen:
Fig. 1: eine schematische geschnittene Darstellung einer Ausführungsform einer Gasinjektionslanze und
Fig. 2: eine schematische geschnittene Darstellung während des Einsatzes der Injektionsvorrichtung in ihrer bevorzugten Ausgestaltung.

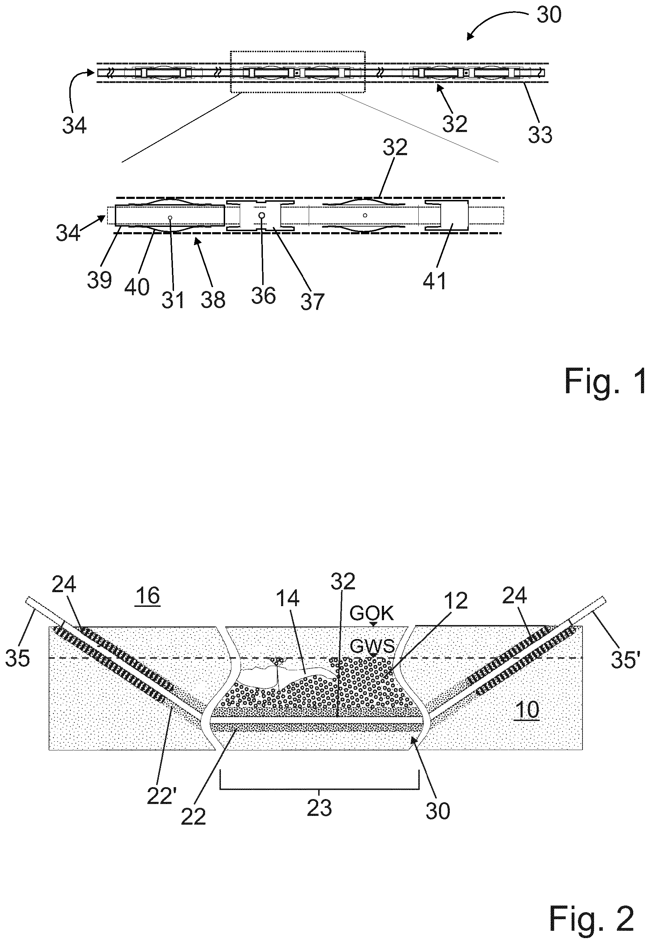

Fig. 1 zeigt eine schematische geschnittene Darstellung eines Abschnitts einer Ausführungsform einer Injektionsvorrichtung 30, insbesondere einer Gasinjektionslanze 34, in vergrößerter und detaillierter Explosionsdarstellung. Erkennbar ist in der Übersichtsdarstellung gleichfalls ein Stützrohr 32 mit Gasdurchlässen 33, ausgestattet mit der Gasinjektionslanze 34.

Die Injektionsvorrichtung 30 umfasst die Gasinjektionslanze 34, über die das Gas auf besonders einfache Weise in den zu begasenden Bereich, eine Injektionszone 23 (vgl. Fig. 2), eingebracht werden kann. Damit das Gas die Gasinjektionslanze 34 verlassen kann, weist diese Injektionsdüsen 36 auf, die in der dargestellten Ausführungsform jeweils auf einem Düsenträger 37 angeordnet sind und als eine Bohrung in diesem oder als gesondert eingesetztes Element ausgeführt sein können.

Wenn beabsichtigt wird, dass aus der Injektionsdüse 36 austretende Gas nur in einem bestimmten Bereich des Stützrohrs 32 austreten zu lassen, ist es vorteilhaft, mittels eines unter Druck stehenden Fluids expandierbare Packerelemente 38 einzusetzen. Diese sind in axialer Richtung auf beiden Seiten der Injektionsdüse 36 um die Gasinjektionslanze 34, die als Schlauch oder Rohr ausgeführt ist, angeordnet, sodass das Gas nur in dem Bereich zwischen den beiden Packerelementen 38 aus dem Stützrohr 32 austreten kann. Der Ringspalt zwischen Gasinjektionslanze 34 und Stützrohr 32 ist im Bereich der Packerelemente 38 abgedichtet, solange die Packerelemente 38 durch ausreichenden Fluiddruck expandiert sind und sowohl an der Gasinjektionslanze 34 als auch an der Innenfläche des Stützrohrs 32 dichtend anliegen.

Bevorzugt werden dabei Packerelemente 38 eingesetzt, die durch eine Membran 40 gebildet werden und durch Gasdruck expandieren. Dazu wird bevorzugt dasselbe Gas verwandt und aus der Gasinjektionslanze bzw. dem Schlauch oder Rohr, das deren Grundlage bildet, entnommen. Bei ausreichend hohem Gasdruck, wobei das Gas durch eine Zuführeinrichtung 31, eine Öffnung im Packerträger 39, aus der Gasinjektionslanze 34 in die Membran 40 austritt, expandieren somit die Packerelemente 38 bis an die Innenwand des Stützrohrs 32 heran und schaffen eine Abdichtung. Stehen die Packerelemente 38 unter Druck, kann die Gasinjektionslanze 34 nicht im Stützrohr 32 verschoben werden.

Vorteilhafterweise sind die Packerelemente 38 auf Packerträgern 39 installiert. Damit wird es möglich, aus Düsenträgern 37 und Packerträgern 39 sowie dazwischen angeordneten Rohr- oder Schlauchabschnitten eine Gasinjektionslanze 34 aufzubauen.

Die Zuführeinrichtung 31 ist in Abhängigkeit von der Beschaffenheit der wenigsten einen Injektionsdüse 36 so dimensioniert, dass bei einem Bruch der Membran 40 immer noch eine ordnungsgemäße Begasung möglich bleibt und nicht übermäßig viel Gas über die Zuführeinrichtung 31 abströmt.

Die Abdichtung zwischen der Membran 40 und dem Packerträger 39 erfolgt durch jeweils einen Düsenträger 37 und ein Anschlussstück 41, die auf die Enden der Membran 40 des Packerelements 38 aufschiebbar sind. In der Detaildarstellung, die als Explosionsdarstellung ausgeführt ist, steht das Aufschieben noch bevor.

Fig. 2 zeigt eine schematische geschnittene Darstellung während der Durchführung eines beispielhaften Einsatzes der Injektionsvorrichtung in ihrer bevorzugten Ausgestaltung, wozu eine Feststoffmatrix 10 einen darin eingebrachten Bohrkanal aufweist, dessen Bohrkanalwand bereits zu einem homogenisierten Bereich 22 umgestaltet wurde. Dies dient einem verbesserten und gleichmäßigen Durchtritt von Gasen aus dem Bohrkanal mit dem homogenisierten Bereich 22 in die Feststoffmatrix 10. Das Gas wird zumindest über die erste Gasleitung 35 herangeführt, was aber gleichermaßen über die zweite Gasleitung 35` erfolgen kann. Beide dienen somit als Gasleitungen 35, 35`. Die Gasleitung 35, 35` ist unmittelbar mit dem Stützrohr 32 verbunden. Ist die Gasinjektionslanze 34 (vgl. Fig. 1) vorgesehen, dann wir die Gasleitung 35, 35` mit dieser verbunden.

Das Stützrohr 32 (vgl. auch Fig. 1) wird im dargestellten Ausführungsbeispiel in den früheren Bohrkanal mit kolmatierter Bohrkanalwand eingebracht, wobei gleichzeitig eine Homogenisierung der kolmatierten Bohrkanalwand des ursprünglichen Bohrkanals erfolgt und damit eine Filterzone erzeugt wird, der homogenisierte Bereich 22. Dieser liegt dadurch direkt an dem Stützrohr 32 an.

Das unter Druck über das Stützrohr 32 in den homogenisierten Bereich 22 eingebrachte Gas dringt in die Feststoffmatrix 10 ein und bildet dort über die Länge der Injektionszone 23 einen Gasspeicher 12 aus. Im dargestellten Ausführungsbeispiel erfolgt das Einbringen des Gases mithilfe der Injektionsvorrichtung 30, wobei das Stützrohr im Bereich einer Injektionszone 23 perforiert, beispielsweise geschlitzt ausgeführt ist. Der Gasspeicher 12 nimmt die Porenräume der Feststoffmatrix 10 ein und behindert damit beispielsweise deren hydraulische Wirksamkeit. Im dargestellten Ausführungsbeispiel bildet sich der Gasspeicher 12 bis zum Grundwasserspiegel GWS aus. Die Ausbildung des Gasspeichers 12, durch stilisierte Luftblasen gekennzeichnet, kann nicht erfolgen, wenn Gasaufstiegsbarrieren 14 oberhalb des Stützrohrs 32 bzw. des homogenisierten Bereichs 22 in der Feststoffmatrix 10 vorliegen.

Um ein unerwünschtes Abdriften des Gases über den homogenisierten Bereich 22 an den Stellen, an denen der Bohrkanal bzw. das an dessen Stelle eingeführte Stützrohr 32 und mit ihm der homogenisierte Bereich 22 eine Neigung in Richtung Geländeoberkante GOK aufweist, zu verhindern, ist eine Abdichtung 24 vorgesehen, die den gasdurchlässigen, homogenisierten Bereich 22 ersetzt. Die Abdichtung 24 umgibt das Stützrohr 32, das im Bereich der Abdichtung 24 keine Perforation und insbesondere keine Gasdurchlässe 33 aufweist, so dass durch die Abdichtung 24 ein unerwünschtes Austreten des unter Druck stehenden Gases in die Umgebung 16 oder anderswo hin, außer in die Injektionszone 23, verhindert wird.

Der homogenisierte Bereich 22' wird nicht für den Gaseintrag genutzt, da das Stützrohr 32 dort keine Gasdurchlässe 33 aufweist. Alternativ zu dieser Ausgestaltung ist es jedoch vorgesehen, auch diesen Bereich zum Gaseintrag mit zu nutzen und das Stützrohr 32 dazu mit Gasdurchlässen 33 auszustatten.

## Patentansprüche

1. Gasinjektionslanze, umfassend einen langgestreckten, zumindest unter Druck hohlzylindrischen, flexiblen Grundkörper, der zumindest an einem ersten Ende mit einer ersten Gasleitung (35) verbindbar und in ein Stützrohr (32) eingeführt ist und wenigstens eine Injektionsdüse (36), ausgeführt als eine Perforation in einer Wand der Gasinjektionslanze (34) und geeignet zu einem kontrollieren Gasdurchgang, umfasst, **dadurch gekennzeichnet, dass** die Gasinjektionslanze ein oder mehrere in einem Ringspalt zwischen Gasinjektionslanze (34) und Stützrohr (32) abdichtend wirkende Paare von Packerelementen (38) umfasst, die eine Zuführeinrichtung (31) eines Fluids zu den Packerelementen (38) umfassen und die durch das unter Druck dem Inneren der Packerelemente (38) zugeführte Fluid expandieren, und wobei zwischen jeweils einem Paar Packerelementen (38) wenigstens eine der Injektionsdüsen (36) angeordnet ist.

2. Gasinjektionslanze nach Anspruch 1, wobei zwei bis vier Injektionsdüsen (36) zwischen einem Paar Packerelementen (38) angeordnet sind.

3. Gasinjektionslanze nach einem der Ansprüche 1 oder 2, die eine gemeinsame Gasleitung (35, 35') aufweist, ausgeführt zur Versorgung der wenigstens einen Injektionsdüse (36) und der Packerelemente (38).

4. Gasinjektionslanze nach einem der Ansprüche 1 oder 2, wobei gesonderte Gasleitungen (35, 35') zur Versorgung der wenigstens einen Injektionsdüse (36) und wenigstens einem Paar Packerelemente (38) oder der einzelnen Packerelemente (38) separat vorgesehen sind.

5. Gasinjektionslanze nach einem der vorherigen Ansprüche, wobei die Injektionsdüse (36) in der Weise ausgeführt ist, dass das Verhältnis von Gasinjektionsdruck zu Düsenquerschnitt der wenigstens einen Injektionsdüse (36) so eingestellt werden kann, dass eine superkritische Gasströmung in der wenigstens einen Injektionsdüse (36) ermöglicht wird.

6. Gasinjektionslanze nach einem der vorherigen Ansprüche, wobei jeweils maximal vier Injektionsdüsen (36) zwischen den paarweise angeordneten Packerelementen (38) ausgeführt sind.

7. Gasinjektionslanze nach einem der vorherigen Ansprüche, wobei eine Gasaustragsmenge an der oder den Injektionsdüsen (36) zwischen einem Paar Packerelementen (38) unterschiedlich einstellbar ist.

8. Gasinjektionslanze nach einem der vorherigen Ansprüche, wobei das Stützrohr (32) an wenigstens einem Ende eine Öffnung aufweist, durch die Werkzeuge zur Regenerierung mit mechanischen, pneumatischen, hydraulischen oder chemischen Maßnahmen in das Stützrohr (32) eingeführt werden können.

9. Gasinjektionslanze nach einem der vorherigen Ansprüche, wobei die Gasinjektionslanze (34) gegenüber dem Stützrohr (32) verschiebbar und auswechselbar ausgeführt ist.

10. Gasinjektionslanze nach einem der vorherigen Ansprüche, die innerhalb des Stützrohrs (32) angeordnet ist, über das die Injektion durch Übertritt des Gases in eine poröse Feststoffmatrix (10) erfolgt, wobei das Stützrohr (32) zumindest auf einem Teilabschnitt, der durch eine Injektionszone (23) führt, Gasdurchlässe (33) aufweist.

11. Gasinjektionslanze nach einem der vorherigen Ansprüche, wobei die Gasdurchlässe (33) in dem Stützrohr (32) als Schlitze mit einer Schlitzweite zwischen 0,1 und 2 mm ausgeführt sind und/oder wobei das Stützrohr (32) einen Durchmesser zwischen 15 und 150 mm aufweist.

12. Gasinjektionslanze nach einem der vorherigen Ansprüche, wobei das Stützrohr (32) in seinem Verlauf mit wenigstens einem Abschnitt ohne Gasdurchlässe (33) ausgeführt ist.

13. Gasinjektionslanze nach einem der vorherigen Ansprüche, wobei Sensoren zur Aufzeichnung von Druck und Gasdurchfluss an einem ersten und an einem zweiten Ende der Gasinjektionslanze (34) sowie im Ringraum zwischen der ersten Gasleitung (35) und der zweiten Gasleitung (35') zum nicht geschlitzten Abschnitt des Stützrohrs (32) vorgesehen sind.

## Claims

1. A gas injection lance, comprising an elongated, at least under pressure hollow cylindrical, flexible base body, which is connectable at least at a first end to a first gas conduit (35) for a gas and is inserted into a support tube (32) and comprises at least one injection nozzle (36), configured as a perforation in a wall of the gas injection lance (34) and suitable for a controlled passage of the gas, wherein injection is effected by passage of the gas into a porous solid matrix (10), **characterized in that** the gas injection lance comprises one or more pairs of packer elements (38) acting in a sealing manner in an annular gap between the gas injection lance (34) and the support tube (32), which comprise a supply device (31) for a fluid to the packer elements (38) and which expand by the fluid supplied under pressure to the interior of the packer elements (38), and wherein at least one of the injection nozzles (36) is arranged between each respective pair of packer elements (38).

2. The gas injection lance according to claim 1, wherein two to four injection nozzles (36) are arranged between a pair of packer elements (38).

3. The gas injection lance according to any one of claims 1 or 2, comprising a common gas conduit (35, 35') configured to supply the at least one injection nozzle (36) and the packer elements (38).

4. The gas injection lance according to any one of claims 1 or 2, wherein separate gas conduits (35, 35') are provided for supplying the at least one injection nozzle (36) and at least one pair of packer elements (38) or the individual packer elements (38) separately.

5. The gas injection lance according to any one of the preceding claims, wherein the injection nozzle (36) is configured such that the ratio of gas injection pressure to nozzle cross-section of the at least one injection nozzle (36) can be adjusted to enable supercritical gas flow in the at least one injection nozzle (36).

6. The gas injection lance according to any one of the preceding claims, wherein in each case a maximum of four injection nozzles (36) are implemented between the packer elements (38) arranged in pairs.

7. The gas injection lance according to any one of the preceding claims, wherein a gas discharge amount at the one or more injection nozzles (36) between a pair of packer elements (38) is variably adjustable.

8. The gas injection lance according to any one of the preceding claims, wherein the support tube (32) has an opening at at least one end through which tools for regeneration can be inserted into the support tube (32) using mechanical, pneumatic, hydraulic or chemical measures.

9. The gas injection lance according to any one of the preceding claims, wherein the gas injection lance (34) is displaceable relative to the support tube (32) and is replaceable.

10. The gas injection lance according to any one of the preceding claims, which is arranged inside the support tube (32) via which the injection is carried out by passing the gas into a porous solid matrix (10), the support tube (32) having gas passages (33) at least on a partial section passing through an injection zone (23).

11. The gas injection lance according to any one of the preceding claims, wherein the gas passages (33) in the support tube (32) are configured as slots with a slot width between 0.1 and 2 mm and/or wherein the support tube (32) has a diameter between 15 and 150 mm.

12. The gas injection lance according to any one of the preceding claims, wherein the length of the support tube (32) is implemented with at least one section without gas passages (33).

13. The gas injection lance according to any one of the preceding claims, wherein sensors for recording pressure and gas flow are provided at a first and at a second end of the gas injection lance (34) as well as in the annular space between the first gas conduit (35) and the second gas conduit (35') and the non-slotted section of the support tube (32).

## Revendications

1. Lance d'injection de gaz, comprenant un corps de base flexible, étendu en longueur, cylindrique creux au moins sous pression, qui peut être connecté au moins à une première extrémité à une première conduite de gaz (35) pour un gaz et est introduit dans un tuyau de support (32), et comprend au moins une buse d'injection (36), réalisée en tant que perforation dans une paroi de la lance d'injection de gaz (34) et convenant à un passage contrôlé du gaz, dans laquelle une injection s'effectue par débordement du gaz dans une matrice solide poreuse (10), **caractérisée en ce que** la lance d'injection de gaz comprend une ou plusieurs paires d'éléments de garniture d'étanchéité (38) agissant de manière étanchéifiante dans une fente annulaire entre lance d'injection de gaz (34) et tuyau de support (32), qui comprennent un dispositif d'amenée (31) d'un fluide vers les éléments de garniture d'étanchéité (38) et qui se dilatent à travers le fluide amené sous pression à l'intérieur des éléments de garniture d'étanchéité (38), et dans laquelle au moins une des buses d'injection (36) est disposée entre à chaque fois une paire d'éléments de garniture d'étanchéité (38).

2. Lance d'injection de gaz selon la revendication 1, dans laquelle deux à quatre buses d'injection (36) sont disposées entre une paire d'éléments de garniture d'étanchéité (38).

3. Lance d'injection de gaz selon une des revendications 1 ou 2, qui présente une conduite de gaz commune (35, 35'), réalisée pour l'alimentation de l'au moins une buse d'injection (36) et des éléments de garniture d'étanchéité (38).

4. Lance d'injection de gaz selon une des revendications 1 ou 2, dans laquelle des conduites de gaz séparées (35, 35') sont prévues séparément pour l'alimentation de l'au moins une buse d'injection (36) et d'au moins une paire d'éléments de garniture d'étanchéité (38) ou des éléments de garniture d'étanchéité individuels (38).

5. Lance d'injection de gaz selon une des revendications précédentes, dans laquelle la buse d'injection (36) est réalisée de telle sorte que le rapport de la pression d'injection de gaz sur la section transversale de buse de l'au moins une buse d'injection (36) peut être réglé de sorte qu'un écoulement gazeux supercritique est permis dans l'au moins une buse d'injection (36).

6. Lance d'injection de gaz selon une des revendications précédentes, dans laquelle quatre buses d'injection (36) maximum à chaque fois sont réalisées entre les éléments de garniture d'étanchéité (38) disposés par paires.

7. Lance d'injection de gaz selon une des revendications précédentes, dans laquelle une quantité de libération de gaz peut être réglée différemment au niveau de la ou des buses d'injection (36) entre une paire d'éléments de garniture d'étanchéité (38).

8. Lance d'injection de gaz selon une des revendications précédentes, dans laquelle le tuyau de support (32) présente à au moins une extrémité une ouverture à travers laquelle des outils pour la régénération avec des mesures mécaniques, pneumatiques, hydrauliques ou chimiques peuvent être introduits dans le tuyau de support (32).

9. Lance d'injection de gaz selon une des revendications précédentes, dans laquelle la lance d'injection de gaz (34) est réalisée de manière à pouvoir être coulissée par rapport au tuyau de support (32) et de manière à pouvoir être remplacée.

10. Lance d'injection de gaz selon une des revendications précédentes, qui est disposée au sein du tuyau de support (32), par le biais duquel l'injection s'effectue par débordement du gaz dans une matrice solide poreuse (10), dans laquelle le tuyau de support (32) présente des orifices de gaz (33) au moins sur une section partielle qui conduit à travers une zone d'injection (23).

11. Lance d'injection de gaz selon une des revendications précédentes, dans laquelle les orifices de gaz (33) sont réalisés dans le tuyau de support (32) en tant que fentes avec une largeur de fente comprise entre 0,1 et 2 mm et/ou dans laquelle le tuyau de support (32) présente un diamètre compris entre 15 et 150 mm.

12. Lance d'injection de gaz selon une des revendications précédentes, dans laquelle le tuyau de support (32) est réalisé dans son tracé avec au moins une section sans orifices de gaz (33).

13. Lance d'injection de gaz selon une des revendications précédentes, dans laquelle des capteurs pour l'enregistrement de la pression et du débit gazeux sont prévus à une première et à une seconde extrémité de la lance d'injection de gaz (34) ainsi que dans l'espace annulaire entre la première conduite de gaz (35) et la seconde conduite de gaz (35') vers la section non fendue du tuyau de support (32).
